# FASCICULE DE BREVET EUROPEEN

(11) **EP 0 412 016 B1**
(45) Date de publication et mention de la délivrance du brevet: **08.06.1994**
(21) Numéro de dépôt: 90402227.4
(22) Date de dépôt: 03.08.1990
(51) Int. Cl.: G02B 23/08, B63G 8/38, F41G 7/32

(54) **Dispositif d'observation aérienne pour un sous-marin**
Luftraumbeobachtungsvorrichtung für ein Unterseeboot
Aerial observation device for a submarine

(30) Priorité: 04.08.1989 FR 8910548
(43) Date de publication de la demande: 06.02.1991
(73) Titulaire: AEROSPATIALE Société Nationale Industrielle, 75781 Paris Cédex 16 (FR)
(72) Inventeur: Comon, Jean Paul, F-75007 Paris (FR); Maree, Michel, F-91190 Gif sur Yvette (FR)
(74) Mandataire: Dubois-Chabert, Guy

(56) Documents cités:
- EP-A- 0 082 753
- DE-A- 1 068 482
- DE-A- 3 144 952
- FR-A- 2 560 146

## Description

Le domaine de l'invention concerne les sous-marins et l'observation à distance de la surface de l'eau sur tout l'horizon et de l'espace aérien se trouvant au-dessus, à partir du sous-marin immergé. Un dispositiv permettant l'observation aérienne est connu par éxample de EP-A-0 082 753. Il s'agit d'un engin équipé d'une camera de télévision et relié au sous-marin par un câble electrique.

Les conditions de navigation et les missions des sous-marins exigent des vérifications plus ou moins régulières de la situation en surface. Cette vérification s'effectue actuellement à l'aide d'un périscope. L'utilisation d'un tel dispositif oblige le sous-marin à venir en immersion à faible profondeur, de façon à permettre l'émersion du périscope.

Ce type d'observation de la surface de l'eau ne donne pas entière satisfaction. En effet, la visibilité est limitée par la hauteur d'observation du périscope au-dessus de l'eau. Cette limitation est importante, voire même totale, lorsque la mer est forte. D'autre part, de nombreux sous-marins et en particulier les sous-marins nucléaires effectuent des missions de longue durée en plongée. La remontée en immersion périscopique prend donc un certain temps, cette perte de temps pouvant nuire à l'efficacité de la mission du sous-marin.

La présente invention a pour but de remédier à ces inconvénients en proposant un dispositif d'observation différent, pouvant être mis en oeuvre sur n'importe quel sous-marin, ce dernier pouvant rester en plongée profonde, tout en bénéficiant d'une visibilité à longue portée, même par mauvais temps.

A cet effet, l'objet principal de l'invention est un dispositif d'observation aérienne pour un sous-marin utilisant principalement un engin autopropulsé à changement de milieu.

Selon l'invention, le dispositif comprend :
- une fibre optique de transmission ; et
- un engin autopropulsé à changement de milieu, avec un axe principal, et éjectable du sous-marin, comprenant :
   . une première bobine montée fixe sur l'engin et autour de laquelle est enroulée une première partie de la fibre optique de transmission ;
   . des moyens de propulsion ;
   . un senseur pour l'observation, dont l'axe de visée est désaxé par rapport à l'axe principal de l'engin ;
   . des moyens de mise en rotation du senseur pour permettre un balayage complet de l'horizon en gisement ; et
   . un dispositif de commande de l'engin.

Un tel dispositif, permettant à l'engin d'effectuer plusieurs tours d'horizon, peut aussi transmettre, par l'intermédiaire de la fibre optique de transmission, des images exploitées à bord du sous-marin.

Une première réalisation du dispositif selon l'invention utilise une deuxième bobine montée fixe sur le sous-marin et autour de laquelle est enroulée une deuxième partie de la fibre optique.

Dans une deuxième réalisation du dispositif, une deuxième bobine est montée sur une bouée qui est elle-même reliée au sous-marin par un câble, de manière à maintenir cette deuxième bobine à l'écart de la coque du sous-marin.

Dans une troisième réalisation du dispositif selon l'invention, la deuxième bobine est montée sur une même bouée reliée au sous-marin par l'intermédiaire d'un dispositif télescopique.

Ces deux dernières réalisations permettent d'éviter que la fibre optique, une fois déroulée, ne subisse des contraintes importantes à sa sortie du sous-marin.

Le senseur peut être une caméra à dispositifs de transfert de charges, fournissant des signaux électriques de sortie.

Une réalisation préférentielle de l'invention prévoit un empennage sur l'engin, constituant les moyens de mise en rotation du senseur et assurant la rotation de l'engin autour de son axe principal.

Une autre réalisation du dispositif selon l'invention prévoit que les moyens de mise en rotation du senseur sont constitués d'un parachute placé à l'avant de l'engin et complété d'un dispositif d'ouverture du parachute commandé par le dispositif de commande de l'engin.

Le senseur peut être monté fixe à l'intérieur de l'engin, mais peut également être monté tournant. Dans ce dernier cas, il est entraîné en rotation par un moteur commandé par le dispositif de commande.

De préférence, un dispositif gyroscopique équipe l'engin pour fournir une référence en roulis et une référence en cap aux moyens de commande.

De préférence, la fibre optique est fixée à un dispositif de transformation électro-optique pour transformer les signaux de sortie en signaux optiques afin de les transmettre à la fibre optique.

Un système de déviation de jets peut équiper l'engin, pour contrôler la trajectoire de celui-ci, ce système étant commandé par le dispositif de commande.

Un dispositif d'asservissement en rotation du senseur peut compléter l'engin, tout en étant connecté au dispositif gyroscopique et au dispositif de commande.

L'invention et ses différentes caractéristiques techniques seront mieux comprises à la lecture de la description qui suit et qui est annexée des figures représentant respectivement :
- figure 1, un schéma de fonctionnement du dispositif selon l'invention, l'engin autopropulsé étant fixé d'une première manière au sous-marin ;
- figure 2, un schéma explicatif de la présence de deux bobines dans le dispositif selon l'invention ;
- figure 3, un schéma de fonctionnement du dispositif selon l'invention, l'engin autopropulsé étant fixé d'une deuxième manière au sous-marin ;
- figure 4, un schéma montrant une troisième manière de fixer et de lancer l'engin autopropulsé ;
- figure 5, un schéma de l'engin autopropulsé utilisé dans le dispositif selon l'invention, avant sa mise en place dans une alvéole ;
- figures 6A, 6B et 6C, trois schémas représentant des différents moyens de mises en rotation du senseur, lorsque celui-ci est fixé à l'engin autopropulsé ;
- figure 7, un schéma représentant l'engin, équipé de moyens de mise en rotation du senseur, lorsque ce dernier est monté tournant par rapport à l'engin.

Le concept du dispositif d'observation selon l'invention est donc d'éjecter et d'envoyer un engin autopropulsé 10 au-dessus de la surface de l'eau, pour qu'il effectue, au moyen d'un senseur, l'observation choisie.

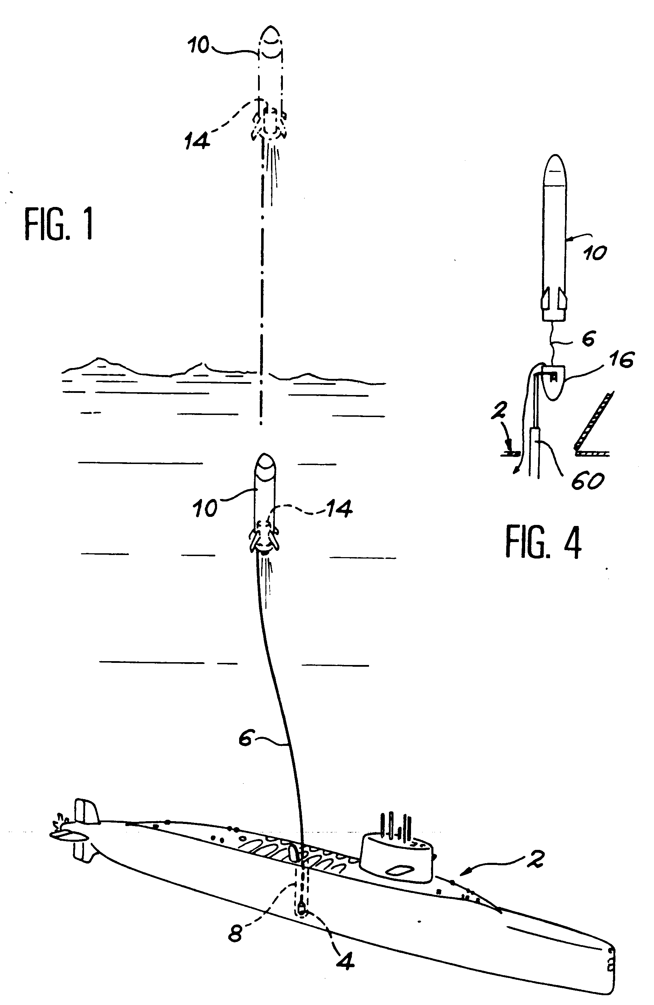

En se reportant au schéma de la figure 1, un sous-marin 2 est représenté en train d'éjecter un engin autopropulsé 10, relié au sous-marin 2 par l'intermédiaire d'une fibre optique 6 enroulée, d'une part, autour d'une première bobine 14 fixée à l'arrière de l'engin 10 et, d'autre part, autour d'une deuxième bobine 4 fixée au sous-marin 2.

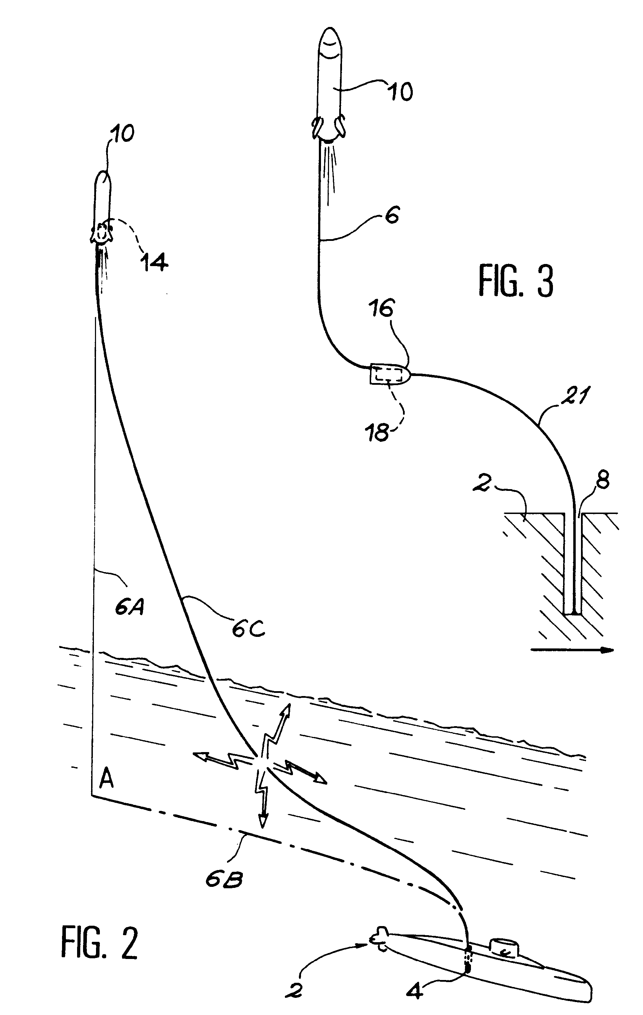

La présence des deux bobines 4 et 14 est expliquée par le schéma de la figure 2.

En effet, la fibre optique 6, lorsqu'elle est déroulée dans l'eau doit être considérée comme fixe, compte tenu des effets de frottement visqueux avec l'eau. En considérant que l'engin 10 a été largué par le sous-marin 2 au point A, l'engin commence son ascension vers la surface de l'eau à partir de ce point A. De son côté, le sous-marin 2 doit continuer sa course. Si la fibre optique 6 est enroulée sur une seule bobine, du fait du déplacement relatif de l'engin 10 et du sous-marin 2, la fibre optique 6 ne peut pas rester fixe dans l'eau. Elle a tendance à prendre une forme repérée 6C, est mobile dans l'eau et subit deux tensions à chacune de ses extrémités dues aux éloignements respectifs de l'engin 10 et du sous-marin 2.

Pour remédier à cet inconvénient, la fibre optique est partagée en deux parties 6A et 6B. La première partie 6A est enroulée sur la première bobine 14, fixée sur l'écran 10, et la deuxième partie 6B est enroulée sur la bobine 4 fixée sur le sous-marin 2. La fibre optique 6 passe directement sans intermédiaire, d'une bobine à l'autre. De cette manière, juste après l'éjection de l'engin 10 au point A par le sous-marin 2, l'éloignement dudit sous-marin s'effectue indépendamment de l'éloignement de l'engin 10, chacun de ces deux véhicules ayant sa propre bobine, les deux parties 6A et 6B du câble 6 étant quasiment fixes dans l'eau.

Il est bien sûr envisageable de supprimer la deuxième bobine 4 fixée au sous-marin 2, au cas où ce dernier reste immobile pendant le fonctionnement du dispositif d'observation.

En revenant à la figure 1, au moment voulu, l'engin 10 est éjecté de l'alvéole 8 et reste relié au sous-marin par l'intermédiaire de la fibre optique 6 qui se déroule simultanément des deux bobine 4 et 14. Après avoir franchi la surface de l'eau, l'engin autopropulsé, repéré 10 et représenté en traits mixtes, poursuit sa course dans l'espace grâce à des moyens de propulsion. L'engin comporte un senseur, qui est alors mis en rotation autour de l'axe principal vertical de l'engin, de manière à effectuer un balayage complet en gisement de l'espace se trouvant au-dessus de la surface de l'eau.

Les sous-marins nucléaires possédant des moyens d'éjection de sondes de mesures bathythermiques remorquées, peuvent utiliser les mêmes moyens de lancement pour lancer l'engin de reconnaissance 10.

En référence à la figure 3, un deuxième mode d'éjection de l'engin 10 hors de l'alvéole 8 peut être mis en oeuvre. Dans ce cas le système utilise une bouée 16, placée au préalable au fond de l'alvéole 8 et reliée au sous-marin 2 par l'intermédiaire d'un câble 21 de courte longueur incluant la fibre optique 6. La deuxième bobine, repérée 4 sur la figure 1 et solidaire du sous-marin 2, est remplacée ici par une bobine 18 fixée à la bouée 16. Lors de l'éjection de l'ensemble de l'engin 10 et de la bouée 16, le câble 21 se déroule, du fait de la poussée d'Archimède appliquée à l'ensemble engin 10/bouée 16.

Une fois cet ensemble écarté de la coque du sous-marin 2, l'engin 10 est expulsé de la bouée 16 et le déroulement de la fibre optique 6 s'effectue avec les première et deuxième bobines 14 et 18, de manière analogue au fonctionnement de la première réalisation décrite sur la figure 1.

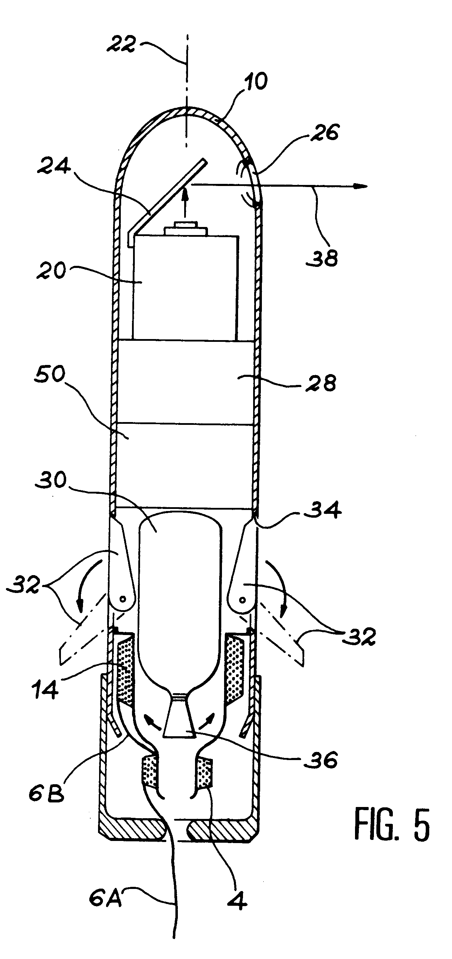

En référence à la figure 4, d'autres dispositifs peuvent être utilisés pour remplacer le câble 21 de la figure 3, c'est-à-dire pour tenir à l'écart de la coque du sous-marin 2, l'ensemble constitué de la bouée 16 et de l'engin 10.

En effet, un dispositif télescopique 60, se déployant du sous-marin 2, peut écarter la bouée de quelques mètres de la paroi externe du sous-marin 2.

Les réalisations décrites sur les figures 3 et 4 permettent d'éviter que la fibre optique ne subisse les tensions ou les chocs à l'endroit où celle-ci sort du sous-marin 2.

En effet, la forme de la coque du sous-marin 2 à la sortie de l'alvéole 8 (figure 1), la présence d'éléments fixés sur la paroi externe du sous-marin, où des remous dûs au déplacement du sous-marin 2 peuvent provoquer des contraintes mécaniques.

En référence à la figure 5, une première réalisation principale de l'engin autopropulsé 10 utilise un senseur 20, fixé dans l'engin 10. En supposant que l'engin 10 est mis en rotation, le senseur 20 doit capter les rayonnements venant de l'extérieur de l'engin à travers le hublot 26 placé latéralement sur l'engin 10. Si le senseur 20 est placé verticalement, c'est-à-dire parallèlement ou de façon confondue à l'axe 22, un miroir 24 est utilisé à la sortie du senseur 20. Il est de préférence positionné à 45°, pour réfléchir les rayons issus de l'extérieur, et en particulier issu de l'horizon sur la face sensible du senseur 20. Le senseur 20 peut être une caméra du type à capteur à transfert de charges travaillant dans des longueurs d'onde visibles ou infrarouges. Un dispositif de commande 28 de l'engin 10 est placé à l'intérieur de ce dernier. Une de ses fonctions est de transformer les signaux électriques de sortie issus du senseur 20 en des signaux optiques à transmettre à la fibre optique 6. Il a également pour fonction de traiter éventuellement des ordres reçus du poste de lancement. L'engin possède également des moyens de propulsion constitués de préférence d'un propulseur 30 placé dans la partie arrière de l'engin 10, positionné coaxialement à l'axe 22 de l'engin 10.

La rotation du senseur 20, fixé à l'engin 10, est assurée par la mise en rotation de l'engin 10, lui-même. Les moyens de mise en rotation de l'engin 10 et du senseur 20 sont, dans le cas représenté à la figure 5, des ailettes déployables 32, constituant un empennage fixe. Ces ailettes 32 ont une forme déterminée pour imprimer un mouvement de rotation à l'engin 10, en coordination avec l'observation choisie. Avant la trajectoire aérienne de l'engin 10, les ailettes 32 sont logées dans des parties périphériques 34 de l'engin 10. Elles sont représentées en traits mixtes en position déployée. Cet empennage assure également la stabilité de la trajectoire aérienne de l'engin 10.

Un dispositif de déviation de jets 36 peut compléter le propulseur 30, dans le but de contrôler et de modifier la trajectoire de l'engin 10.

Derrière le propulseur 30, et positionnée également coaxialement à l'axe 22, se trouve la bobine 14 solidaire de l'engin 10 et autour de laquelle est enroulée la première partie 6A de la fibre optique 6.

L'axe de visée du senseur 20, entre le miroir 24 et le hublot 26, est donc désaxé par rapport à l'axe principal 22 de l'engin 10. Une rotation de ce dernier entraîne donc un balayage d'un faisceau optique 38, défini par la forme du hublot 26. Ce balayage s'effectue donc en gisement, en fonction de la rotation de l'engin 10.

En référence à la figure 6A, on retrouve l'engin 10 équipé du senseur 20 et des ailettes 32, imprimant le mouvement de rotation à l'engin 10, autour de son axe principal 22, le propulseur 30 assurant l'ascension de l'engin 10. Dans ce cas, l'observation s'effectue pendant l'ascension de l'engin 10.

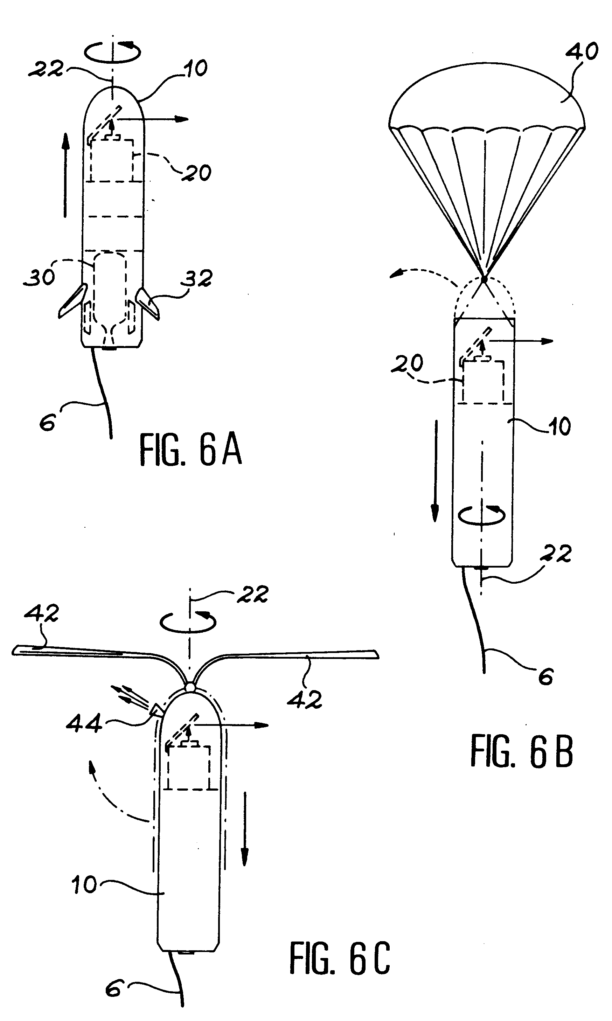

En référence à la figure 6B, la rotation nécessaire au senseur 20 peut être assurée pendant la redescente de l'engin 10, une fois que le propulseur 30 a cessé son action. Dans ce cas, un parachute 40, monté au préalable à l'arrière de l'engin 10, est déployé. Ce déploiement est alors commandé par le dispositif de commande 28, lorsque l'engin atteint son apogée. La forme du parachute 40 peut être définie pour imprimer un lent mouvement de rotation à l'engin 10 autour de son axe principal 22, pendant la descente de l'engin.

En se reportant à la figure 6C, il est possible d'équiper l'engin 10 d'un dispositif d'empennage déployable supplémentaire 42, placé à l'avant de l'engin. Le déploiement de ce deuxième empennage supplémentaire 42 peut être déclenché de manière analogue au parachute 40, c'est-à-dire lorsque l'engin 10 atteint son apogée. La forme de ce deuxième empennage 42 est bien sûr déterminée pour freiner la descente de l'engin 10 et pour imprimer un léger mouvement de rotation à celui-ci, autour de son axe principal 22. On peut également prévoir un ou plusieurs impulseurs pyrotechniques périphériques 44, capables de contrôler sans à-coup la vitesse de rotation de l'engin 10, pendant le parcours aérien. Ces impulseurs 44 sont commandés par le dispositif de commande 28.

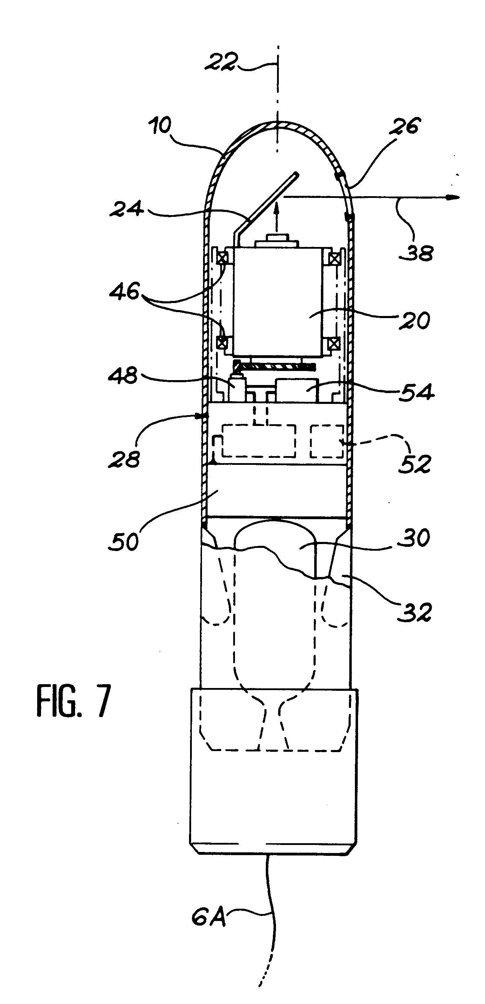

En référence à la figure 7, une autre manière d'assurer la rotation du senseur optique, et donc du faisceau 38, est de le rendre mobile en rotation autour de l'axe principal 22, par rapport à l'engin 10. Dans ce but, le senseur 20 est alors monté dans deux paliers tournants 46. Il peut être entraîné en rotation par un moteur auxiliaire 48 commandé par les moyens de commande 28. Des données de référence de cap peuvent être introduites dans le système de commande 28, pour commander la rotation du senseur 20, en fonction de l'orientation de l'engin 10. De même, un dispositif gyroscopique 50 est de manière générale embarqué à bord d'un tel engin, pour évaluer la rotation de l'engin 10, en particulier autour de l'axe longitudinal 22. Un dispositif d'asservissement 54, commandé par le dispositif de commande 28, peut donc être installé dans l'engin 10, pour asservir la rotation de cet engin autour de son axe principal 22. Le balayage du faisceau 38 du senseur 20 est ainsi asservi de manière à obtenir une observation déterminée à l'avance.

Le déroulement des opérations doit permettre au moins trois tours d'horizon du faisceau 38. Ces trois tours peuvent être effectués soit pendant la montée de l'engin 10 et pendant sa descente, soit pendant l'une ou l'autre de ces deux opérations. L'observation pendant la descente doit être effectuée de préférence avec un frein aérodynamique, tel que décrit en regard des figures 6B et 6C, en utilisant par exemple un parachute 40 ou un empennage 42.

Le tir, ou l'éjection, de l'engin doit être réalisé par le sous-marin par une faible vitesse de déplacement de celui-ci, en l'occurrence de l'ordre de cinq noeuds. En outre, le sous-marin doit pouvoir accélérer et plonger rapidement, dès que les images transmises par l'engin 10 sont enregistrées.

L'utilisation du dispositif selon l'invention peut s'effectuer sur un sous-marin nucléaire équipé de moyens de lancement de sondes de mesures bathythermiques. Dans ce cas, l'engin autopropulsé 10 a de préférence des dimensions qui sont les suivantes :
- un diamètre de l'ordre de 75 mm ;
- une longueur d'environ 1 m ;
- une masse d'environ 5 kg.

Le miroir 24 est de préférence incliné à 45°, ceci dans le cas où l'observation est basée sur l'observation de l'horizon. Il est en effet possible d'envisager une inclinaison différente correspondant à une observation différente, en particulier une observation complète de l'espace aérien.

Le dispositif gyroscopique 50 permet de détecter le roulis et le cap de l'engin 10 et d'effectuer le repérage spatial des images transmises.

Le déroulement des opérations est le suivant. L'ensemble constitué de l'engin autopropulsé 10 et de la bobine 4 est monté au préalable dans une alvéole 8 du sous-marin 2. Lors de l'éjection de l'engin 10, de l'eau est admise à l'intérieur, et en particulier noie les cavités des bobines 4 et 14. Un système de verrouillage assure alors la fixation de la bobine 4 sur le sous-marin 2. Au moment du lancement, un dispositif de déverrouillage sépare l'engin 10 de la deuxième bobine 4. Un dispositif propre au sous-marin 2 permet l'éjection du missile 10 hors de l'alvéole 8. Compte tenu de la poussée d'Archimède s'exerçant verticalement vers le haut sur l'engin 10, et de la pesanteur qui s'exerce verticalement vers le bas, une poussée résiduelle d'environ 35 newtons, verticale et dirigée de bas en haut, s'exerce sur l'engin 10. La remontée de celui-ci s'effectue alors selon une trajectoire quasiment verticale. La poussée additionnelle fournie par le propulseur 30 permet à l'engin autopropulsé 10 de monter à une vitesse égale à environ huit mètres par seconde. L'éjection de l'engin 10 s'effectue à une profondeur sous-marine, de l'ordre de soixante mètres. La durée de la montée sous-marine de l'engin peut donc être environ de six à huit secondes.

Lorsque l'engin 10 franchit la surface de l'eau, la poussée d'Archimède disparaît et l'engin autopropulsé 10 n'est plus soumis qu'à la poussée du propulseur 30. Celle-ci est juste égale ou à peine supérieure à la force d'attraction terrestre augmentée de la traînée aérodynamique de l'engin 10. De la sorte, l'engin 10 conserve sa vitesse verticale avec une légère accélération, les variations de vitesse étant faibles.

Une simple détection de franchissement du dioptre eau-air permet alors le déverrouillage des ailettes 32 qui, dans l'air, permettent une meilleure stabilité de l'engin 10. Le propulseur 30 continue à fonctionner pendant la phase aérienne durant environ douze secondes. Pendant ce temps, l'engin 10 parcourt environ cent mètres. la rotation de l'engin est telle que le senseur optique, qui lui est solidaire, a balayé au moins trois fois l'horizon.

Si cela est nécessaire, le contrôle de la trajectoire de l'engin 10 peut être assuré par l'intermédiaire des dispositifs déviateurs de jets latéraux. Ceci peut se faire par l'intermédiaire du dispositif de commande 28 équipé de la référence en cap.

Lorsque l'engin est équipé d'un moyen de freinage aérodynamique, tel que le parachute 40, le propulseur 30 peut ne fonctionner que six secondes pendant sa phase aérienne. L'engin autopropulsé 10 culmine alors à une hauteur d'environ cinquante mètres. Les prises de vue par le senseur 20 peuvent donc être effectuées pendant la descente, mais également pendant la montée.

Lorsque la qualité de l'image souhaitée le requiert, la vitesse de rotation de la caméra constituant le senseur 20, peut être limitée à une rotation d'un pixel par milliseconde. Il est également envisagé d'asservir la position en gisement du miroir 24, lorsque la vitesse de rotation du senseur n'est pas constante.

Lorsque les images fournies par le senseur 20 ont été transmises au poste de lancement par l'intermédiaire de la fibre optique, la deuxième bobine de fibre 4 est alors éjectée et le système de lancement se trouvant à l'intérieur de l'alvéole 8 peut être mis en conditionnement pour un autre lancement.

La réalisation préférentielle de l'invention utilise un senseur 20 optique, tel qu'une caméra CCD. Un senseur électromagnétique peut également être utilisé.

On peut constater que le dispositif n'impose pas de grandes longueurs de fibre optique. Par exemple, la deuxième partie 6B de la fibre optique n'excède pas cent mètres, tandis que la longueur de la première partie 6A de cette fibre optique n'excède pas deux cent cinquante mètres. La longueur totale maximale de la fibre est donc de trois cent cinquante mètres. Il s'ensuit que son coût est faible. De plus, il est possible d'utiliser de la fibre de gros diamètre, qui est plus facile à réaliser. En effet, dans ce cas, l'atténuation linéique de transmission tolérée peut être très élevée, de l'ordre de vingt à trente dB/km, alors que dans les fibres utilisées en télécommunication, cette atténuation est de 0,2 à 0,3 dB/km. Par ailleurs, l'utilisation d'une fibre de gros diamètre de coeur, permet également l'emploi de diodes d'émission de signaux optiques et de phototransistors de réception de performances courantes et donc de faible coût.

Du fait du faible temps de fonctionnement du dispositif, on peut utiliser des dispositifs gyroscopiques à faible durée de vie, par exemple des gyroscopes à toupie lancée par pyrotechnie et dont la vitesse n'est pas entretenue. La dérive alors acceptée peut être relativement forte, de l'ordre de 300°/h, alors que les dérives des ensembles gyroscopiques de missiles sont souvent comprises entre 3 et 30°/h. Leur coût est donc faible.

Il en est de même du propulseur et du dispositif de commande assurant le pilotage qui ne fonctionne que pendant quelques secondes.

De manière générale, le bilan énergétique est faible, ce qui entraîne un faible coût du dispositif.

On voit que le dispositif selon l'invention permet à un sous-marin de rester en plongée profonde tout en ayant une hauteur d'observation importante, autorisant même une visibilité à longue portée quelque soit l'état de la mer.

## Revendications

1. Dispositif d'observation aérienne pour un sous-marin, comprenant
- une fibre optique de transmission (6) ;
- un engin autopropulsé à changement de milieu, éjectable du sous-marin (2) et comportant un axe vertical principal (22), ledit engin comprenant :
. une première bobine (14) montée fixe sur l'engin (10) et autour de laquelle est enroulée une première partie (6A) de la fibre optique de transmission (6) ;
. un senseur (20) pour l'observation, et dont l'axe de visée est désaxé par rapport à l'axe principal (22) ;
. des moyens de mise en rotation du senseur (20) pour permettre un balayage complet en gisement ; et
. un dispositif de commande (28) de l'engin (10).

2. Dispositif selon la revendication 1, caractérisé en ce qu'il comprend une deuxième bobine (4) montée fixe sur le sous-marin (2) et autour de laquelle est enroulée une deuxième partie (6B) de la fibre optique (6).

3. Dispositif selon la revendication 1, caractérisé en ce qu'il comprend une deuxième bobine (18) montée sur une bouée (16) reliée au sous-marin (2) par un câble (21) pour maintenir la deuxième bobine (18) à l'écart de la coque du sous-marin et autour de laquelle est enroulée une deuxième partie (6B) de la fibre optique (6).

4. Dispositif selon la revendication 1, caractérisé en ce qu'il comprend une deuxième bobine (18) montée sur une bouée (16) reliée au sous-marin (2) par un dispositif télescopique (56) pour maintenir la deuxième bobine (18) à l'écart de la coque du sous-marin et autour de laquelle est enroulée une deuxième partie (6B) de la fibre optique (6).

5. Dispositif d'observation selon l'une quelconque des revendications précédentes, caractérisé en ce que le senseur (20) est une caméra à dispositifs de transfert de charges fournissant des signaux électriques de sortie.

6. Dispositif d'observation selon l'une quelconque des revendications précédentes, caractérisé en ce qu'il comprend un empennage (32) constituant les moyens de mise en rotation de l'engin (10) autour de son axe principal (22).

7. Dispositif d'observation selon l'une quelconque des revendications 1 à 5, caractérisé en ce que les moyens de mise en rotation du senseur (20) sont constitués d'un parachute (40) placé à l'avant de l'engin (10) et complété d'un dispositif d'ouverture commandé par le dispositif de commande (28).

8. Dispositif d'observation selon l'une quelconque des revendications 1 à 5, caractérisé en ce que les moyens de mise en rotation du senseur (20) sont constitués d'un empennage déployable supplémentaire (42) placé à l'avant de l'engin (10) et complété d'un dispositif d'ouverture commandé par le dispositif de commande (28).

9. Dispositif d'observation selon l'une quelconque des revendications 6, 7, ou 8, caractérisé en ce que le senseur (20) est monté fixe à l'intérieur de l'engin (10).

10. Dispositif d'observation selon l'une quelconque des revendications 1 à 5, caractérisé en ce que le senseur (20) est monté tournant à l'intérieur de l'engin (10) et est entraîné en rotation par un moteur (48) commandé par le dispositif de commande (28).

11. Dispositif d'observation selon l'une quelconque des revendications précédentes, caractérisé en ce qu'il comprend un dispositif gyroscopique (50) pour fournir une référence en roulis et une référence en cap aux moyens de commande (28).

12. Dispositif d'observation selon la revendication 5, caractérisé en ce que le dispositif de commande (28) transforme les signaux de sortie du senseur (20) en signaux optiques pour les transmettre à la fibre optique.

13. Dispositif d'observation selon l'une quelconque des revendications précédentes, caractérisé en ce qu'il comprend un système de déviation par jet (36) commandé par le dispositif de commande (28) pour contrôler la trajectoire de l'engin.

14. Dispositif d'observation selon les revendications 10 ou 11, caractérisé en ce qu'il comprend un dispositif d'asservissement en rotation (54) du senseur (20) et connecté au dispositif de commande (28).

15. Dispositif d'observation selon la revendication 9, caractérisé en ce qu'il comprend un dispositif d'asservissement en rotation de l'engin (10), constitué d'impulseurs pyrotechniques latéraux (44) et connecté au dispositif de commande (28).

## Patentansprüche

1. Vorrichtung zur Luftbeobachtung für ein U-Boot umfassend
- eine Glasfaser zur Übertragung (6);
- einen Eigenantriebsmotor mit Mediumsverstellung, der aus dem U-Boot (2) auswerfbar ist und eine vertikale Hauptachse (22) aufweist, wobei der Motor umfaßt:
- eine erste fest auf dem Motor (10) angebrachte Spule (14), um die ein erster Teil (6A) der Übertragungsglasfaser (6) gewickelt ist;
- einen Sensor (20) zur Beobachtung, dessen Beobachtungsachse im Verhältnis zur Hauptachse (22) verschoben ist;
- Mittel zur Rotationsbewegung des Sensors (20), um eine vollständige Abtastung des Winkels zu ermöglichen; und
- eine Steuervorrichtung (28) des Motors (10).

2. Vorrichtung nach Anspruch 1, dadurch gekennzeichnet, daß sie eine zweite Spule (4) umfaßt, die fest am U-Boot (2) montiert ist und um die herum ein zweiter Teil (6B) der Glasfaser (6) herumgewickelt ist.

3. Vorrichtung nach Anspruch 1, dadurch gekennzeichnet, daß sie eine zweite Spule (18) umfaßt, die auf eine Boje montiert ist (16), die mit dem U-Boot (2) durch ein Kabel (21) verbunden ist, um die zweite Spule (18) vom Schiffsrumpf des U-Bootes entfernt zu halten und um die herum ein zweiter Teil (6B) der Glasfaser (6) herumgewickelt ist.

4. Vorrichtung nach Anspruch 1, dadurch gekennzeichnet, daß sie eine zweite Spule (18) umfaßt, die auf eine Boje (16) montiert ist, die mit dem U-Boot (2) über eine teleskopische Vorrichtung (56) verbunden ist, umd die zweite Spule (18) vom Schiffsrumpf des U-Bootes entfernt zu halten und um die herum ein zweiter Teil (6B) der Glasfaser (6) herumgewickelt ist.

5. Vorrichtung zur Beobachtung nach einem der vorstehenden Ansprüche, dadurch gekennzeichnet, daß der Sensor (20) eine Kamera mit Ladungstransfereinrichtungen ist, die elektronische Ausgabesignale liefert.

6. Vorrichtung zur Beobachtung nach einem der vorstehenden Ansprüche, dadurch gekennzeichnet, daß sie ein Leitwerk (32) umfaßt, das die Mittel zur Rotationsbewegung des Motors (10) um seine Hauptachse (22) herum bildet.

7. Vorrichtung zur Beobachtung nach einem der Ansprüche 1 bis 5, dadurch gekennzeichnet, daß die Mittel zur Rotationsbewegung des Sensors (20) aus einem Fallschirm (40) bestehen, der vorne am Motor (10) angeordnet ist, und daß sie ergänzt werden durch eine Öffnungsvorrichtung, die über eine Steuervorrichtung (28) gesteuert wird.

8. Vorrichtung zur Beobachtung nach einem der Ansprüche 1 bis 5, dadurch gekennzeichnet, daß die Mittel zur Rotationsbewegung des Sensors (20) aus einem zusätzlichen ausfahrbaren Leitwerk (42) bestehen, das vorne am Motor (10) angeordnet ist, und das durch eine Öffnungsvorrichtung ergänzt wird, die über eine Steuervorrichtung (28) gesteuert wird.

9. Vorrichtung zur Beobachtung nach einem der Anspürche 6, 7, oder 8, dadurch gekennzeichnet, daß der Sensor (20) fest im Inneren des Motors (10) montiert ist.

10. Vorrichtung zur Beobachtung nach einem der Anspüche 1 bis 5, dadurch gekennzeichnet, daß der Sensor (20) im Inneren des Motors (10) drehend befestigt ist und von einem Motor (48) zur Rotation angetrieben wird, der über die Steuervorrichtung (28) gesteuert wird.

11. Vorrichtung zur Beobachtung nach einem der vorstehenden Anprüche, dadurch gekennzeichnet, daß er eine gyroskopische Vorrichtung (50) umfaßt, um der Steuereinrichtung (28) einen Bezugswert in der Schlingerbewegung und einen Bezugswert im Kurs zu liefern.

12. Vorrichtung zur Beobachtung nach Anpruch 5, dadurch gekennzeinet, daß die Steuervorrichtung (28) die Ausgabesignale des Sensors (20) in optische Signale umwandelt, um sie an die Glasfaser zu übermitteln.

13. Vorrichtung zur Beobachtung nach einem der vorstehenden Ansprüche, dadurch gekennzeichnet, daß sie ein Düsenablenkungssystem (36) umfaßt, das zur Kontrolle der Motorbahn über die Steuervorrichtung (28) gesteuert wird.

14. Vorrichtung zur Beobachtung nach Anprüchen 10 oder 11, dadurch gekennzeichnet, daß sie eine rotierende Regelungsvorrichtung (54) des Sensors (20) umfaßt, die mit der Steuervorrichtung (28) verbunden ist.

15. Vorrichtung zur Beobachtung nach Anspruch 9, dadurch gekennzeichnet, daß sie eine rotierende Regelungsvorrichtung des Motors (10) umfaßt, die aus pyrotechnischen Seitenatrieben (44) besteht und mit der Steuervorrichtung (28) verbunden ist.

## Claims

1. Aerial observation apparatus for a submarine comprising
- a transmission optical fibre (6);
- a self propelling device for a change in position, ejectable from the submarine (2) and comprising a main vertical axis (22), the said device comprising:
- a first spool (14) fixedly mounted on the device (10) and around which spool a first part (6A) of the transmission optical fibre (6) is wound;
- an observation sensor (20) of which the axis of sight is out of line with respect to the main axis (22);
- means for causing the sensor (20) to rotate to allow a complete bearing scan; and
- a control device (28) of the device (10).

2. Apparatus according to claim 1, characterised in that it comprises a second spool (4) fixedly mounted on the submarine (2) and about which spool a second part (6B) of the optical fibre (6) is wound.

3. Apparatus according to claim 1, characterised in that it comprises a second spool (18) mounted on a buoy (16) connected to the submarine (2) by a cable (21) in order to keep the second spool (18) spaced from the hull of the submarine and about which spool a second part (6B) of the optical fibre (6) is wound.

4. Apparatus according to claim 1, characterised in that it comprises a second spool (18) mounted on a buoy (16) and connected to the submarine (2) by a telescopic device (56) in order to keep the second spool (18) spaced from the hull of the submarine and about which spool a second part (6B) of the optical fibre (6) is wound.

5. Observation apparatus according to any one of the preceding claims, characterised in that the sensor (20) is a camera having devices for the transfer of charges supplying electric output signals.

6. Observation apparatus according to any one of the preceding claims, characterised in that it comprises a tail unit (32) comprising the means for causing the device (10) to rotate about its main axis (22).

7. Observation apparatus according to any one of the claims 1 to 5, characterised in that the means for causing the sensor (20) to rotate are comprised of a parachute (40) which is placed in the front of the device (10) and is completed by an opening device controlled by the control device (28).

8. Observation apparatus according to any one of the claims 1 to 5, characterised in that the means for causing the sensor (20) to rotate are comprised of an additional tail unit (42) which can be opened out, is placed in the front of the device (10) and is completed by an opening device controlled by the control device (28).

9. Observation apparatus according to any one of the claims 6, 7 or 8, characterised in that the senor (20) is fixedly mounted inside the device (10).

10. Observation apparatus according to any one of the claims 1 to 5, characterised in that the sensor (20) is rotatably mounted inside the device (10) and is rotationally driven by a motor (48) controlled by the control device (28).

11. Observation apparatus according to any one of the preceding claims, characterised in that it comprises a gyroscopic device (50) to supply a rolling reference and a heading reference to the control means (28).

12. Observation apparatus according to claim 5, characterised in that the control device (28) changes the output signals of the sensor (20) into optical signals in order to transmit them to the optical fibre.

13. Observation apparatus according to any one of the preceding claims, characterised in that it comprises a jet-operated deviation system (36) controlled by the control device (28) in order to control the trajectory of the device.

14. Observation apparatus according to claim 10 or 11, characterised in that it comprises a device (54) for automatic control in rotation of the sensor (20) and connected to the control device (28).

15. Observation apparatus according to claim 9, characterised in that it comprises a device for automatic control in rotation of the device (10), comprised of lateral pyrotechnic thrusters (44) and connected to the control device (28).
